## Europäisches Patentamt

(19) **European Patent Office**

**Office européen des brevets**

(11) Veröffentlichungsnummer: **0 262 538**
**B1**

(12) # EUROPÄISCHE PATENTSCHRIFT

(45) Veröffentlichungstag der Patentschrift:
22.08.90

(51) Int. Cl.⁵: **B30B 11/00**

(21) Anmeldenummer: **87113746.9**

(22) Anmeldetag: **19.09.87**

(54) Neues Verfahren zur gesteuerten Freisetzung dosierter Schmiermittelmengen bei der Beschichtung von Presswerkzeugen mit Schmiermittelflüssigkeiten und -suspensionen und Vorrichtungen zur Durchführung des Verfahrens.

(30) Priorität: 03.10.86 DE 3633646

(43) Veröffentlichungstag der Anmeldung:
06.04.88 Patentblatt 88/14

(45) Bekanntmachung des Hinweises auf die Patenterteilung:
22.08.90 Patentblatt 90/34

(84) Benannte Vertragsstaaten:
AT BE CH DE ES FR GB IT LI LU NL SE

(56) Entgegenhaltungen:
EP-A- 0 220 164
DE-A- 2 717 438
DE-A- 2 718 433
GB-A- 1 450 477
GB-A- 2 073 830

(73) Patentinhaber: **Dr. Karl Thomae GmbH, Postfach 1755, D-7950 Biberach (Riss)(DE)**

(72) Erfinder: **Gläsel, Volker Ingo, Dr. Dipl.-Chem., Hegauweg 7, D-7950 Biberach 1(DE)**
Erfinder: **Voss, Gunther M., Ziegelstadel 10, D-8918 Diessen/Ammersee(DE)**

## Beschreibung

Die Erfindung betrifft ein neues Verfahren zur gesteuerten Freisetzung dosierter Schmiermittelmengen bei der Beschichtung der mechanisch beanspruchten Zonen von Preßwerkzeugen mit Schmiermittelflüssigkeiten und -suspensionen und Vorrichtung zur Durchführung des Verfahrens.

Durch die DE-A 2 717 438 ist ein Verfahren zum Beschichten von Presskammern in Tablettiermaschinen bekannt, wobei gelöste oder geschmolzene Gleitmittel mittels eines in raschen Zeitabständen kurzzeitig sprühenden Düsensystems vor jedem Pressvorgang auf die Innenwände der Presskammern aufgebracht werden. Das Öffnen und Schliessen der Ventile erfolgt über ein elektronisch arbeitendes Steuergerät; die Auslösung der Steuerimpulse geschieht z.B. über eine Fotozelle, die mit den Oberstempeln in Verbindung steht.

In der DE-A1 3 312 634 wird ein Verfahren und Vorrichtung zum Bepunkten von Formwerkzeugen mit Tröpfchen flüssiger oder suspendierter Schmiermittel bei der Herstellung von Formlingen im Pharma-, Lebensmittel- oder Katalysatorenbereich beschrieben. Es werden über Kapillaren in Verbindung mit Wechsel-Einstoffdüsen alternierend unter Druck stehende Schmiermittellösungen oder -suspensionen und unter Druck stehende Gase so geleitet, daß sich unter einem Gasstoß an der Düsenoberfläche Tropfen bilden, die dann von dort abgelöst und auf bestimmte Zonen von Preßwerkzeugen aufgebracht werden. Die Vorrichtung umfaßt schnellarbeitende Ventile für die kurzzeitige Freigabe von unter Druck stehenden Gasen und Schmiermittelflüssigkeiten oder -suspensionen, wobei sich die Ableitungen jeweils eines Gasventils und eines Flüssigkeitsventils vor einer Kapillare vereinigen und am Ende der Kapillaren Einstoffdüsen angebracht sind. Die Kapillaren mit den jeweiligen Einstoffdüsen sind in sogenannten Bepunktungsschuhen in bestimmten Anordnungen untergebracht. Bei diesem Verfahren wird die erforderliche Schmiermittelmenge aus einem unter Druck stehenden Behälter entnommen und mittels Flüssigkeitsventilen den jeweiligen Kapillaren zugeführt bzw. zudosiert.

Es hat sich gezeigt, daß die Flüssigkeitsventile im Dauerbetrieb z. B. durch Veränderungen der Ventilsitze, ihre Durchflußraten ändern, ausgehend von der einmal ermittelten und justierten Durchflußrate bei einer bestimmten vorgegebenen Öffnungszeit. Dieses Abweichen wurde bislang dadurch korrigiert, daß man die über eine bestimmte Zeiteinheit abgegebene Flüssigkeitsmenge durch eine Mengenkontrolle des Vorratsbehälters mittels einer Waage bestimmte und bei Abweichungen die Ventilzeiten entsprechend korrigierte. Nachteilig war hierbei das erforderliche Wiegeprocedere, das durch die starken Vibrationen der Presse beeinträchtigt wurde. Bei der Kontrolle war die Umdrehungsgeschwindigkeit der Tablettenpresse mitzuberücksichtigen, da eine Veränderung der Anzahl der Preßcyclen auch eine Veränderung der Abgabemengen in einer Zeiteinheit durch die Flüssigkeitsventile mit sich bringt.

Bei dem Verfahren gemäß der obigen Patentanmeldung ist es erforderlich, daß der Flüssigkeitsbehälter unter einem Überdruck steht. Sofern das Lösungs- oder Suspensionsmittel ein niedriger Alkohol ist, stellt ein solcher, unter Druck stehender Behälter ein Sicherheitsrisiko dar. Hinzu kommt, daß bei jedem Nachfüllvorgang das gesamte System entlüftet werden muß, wobei vor dem erneuten Anfahren das System wieder neu einzustellen ist. Es soll nicht unerwähnt bleiben, daß es bis heute nicht möglich war, dieses Procedere abzukürzen, da es keine Durchflußmess-Systeme für die erforderlichen, sehr kleinen Durchsatzmengen gibt (die geringste, überwachbare Durchflußmenge liegt bei ca. 3 l/Stunde).

Es wurde nun gefunden, daß sich bei einem Verfahren, bei welchem aus einem drucklosen Vorratsbehälter mittels einer pulsationsfrei arbeitenden Pumpe, z.B. einer Zahnradpumpe, die Schmiermittellösung oder -suspension einem oder mehreren Flüssigkeitsventilen zugeführt wird, wobei die Fördermenge der Pumpe zur Erzielung einer zur korrekten Beschichtung der Presswerkzeuge erforderlichen Schmiermittelmenge an die Taktzahl der Tablettiermaschine angepaßt ist, diese Nachteile dadurch vermeiden lassen, daß die Förderleistung der Pumpe zur Erzeugung eines permanenten Abgleichvorgangs an einem mit der Pumpe mitlaufenden Tachogenerator abgefragt wird, die dabei gefundenen Werte einem Rechner eingegeben werden, der diese Werte mit dem einmal gefundenen Verhältnis Taktzahl zu Förderleistung, eingegeben über ein Potentiometer, vergleicht und, bei festgestellten Abweichungen, bedingt durch Veränderungen der Maschinenleistung (Taktzahl), eine entsprechende Korrektur zur Herstellung des ursprünglich eingestellten Verhältnisses über ein Potentiometer, welches den Antrieb der Pumpe steuert, veranlaßt wird.

Der Antrieb ist mit dem obengenannten Rechner, der auch das Ansteuerungssystem der Ventile bedient, so verknüpft, daß die Pumpleistung immer an die Ansteuerzeit der Ventile angepaßt ist, d.h. bei länger werdenden Ansteuerungszeiten erhöht sich beispielsweise die Pumpleistung und umgekehrt. Mit dieser Vorgehensweise ist ein einmal eingestellter Durchsatzwert der Schmiermittelflüssigkeit sichergestellt. Die Flüssigkeitsventile dosieren nicht mehr, sie "teilen" nur noch eine durch die Pumpe vordosierte Flüssigkeits- oder Suspensionsmenge.

Bei einer Veränderung der Flüssigkeitsventile (z.B. der Ventilsitze) und daraus abweichender Durchflußraten wird diese Pumpensteuerung auch zu einer Korrektur dieser resultierenden Abweichungen benutzt, und zwar durch Messen der Druckdifferenz im Leitungssystem zwischen Pumpenausgang und Flüssigkeitsventileingang, im Vergleich zu Beginn vorgegebenen (justiertem) Druck. Wenn der Flüssigkeitsventilsitz sich so verändert hat, daß er bei gleicher vorgegebener Öffnungszeit nicht mehr die notwendige sondern eine geringere Flüssigkeitsmenge dosiert, wird zwangsläufig der Druck zwischen Ventil und Pumpe ansteigen oder wenn der Ventilsitz so eingelaufen ist, daß die Durchflußrate da-

2

durch größer geworden ist, wird der Druck abfallen. Dieser Differenzdruck kann leicht ermittelt werden, z. B. durch hydraulische Manometer, Differenzdruckmesser, er wird von einem Rechner digitalisiert dargestellt und so verarbeitet, daß er die Ventilöffnungszeiten entsprechend verkürzt oder verlängert. Die erforderliche Schmiermittelmenge wird durch die synchron zur Taktzahl mitlaufenden Schmiermittelpumpe garantiert und nicht, wie bisher, über die nur anfänglich kodierten Ventile, deren Durchflußraten sich ja, wie bereits erwähnt, ändern können.

Zusammenfassend ist zu sagen, daß das erfindungsgemäße Verfahren drei Vorteile in sich birgt:

a) Fortfall eines unter Überdruck stehenden Schmiermittelflüssigkeit oder -suspension enthaltenden Behälters,
b) die Dosierung läuft zwangsweise synchron mit der Taktzahl der Tablettiermaschine,
c) der am Pumpenausgang anstehende Überdruck wird für eine Differenzdruckmessung benützt, bezogen auf einen vorgegebenen Druck, wobei bei Abweichungen die programmabhängigen Öffnungszeiten der Flüssigkeitsventile korrigiert werden. Damit ist sichergestellt, daß die Werkzeugoberflächen garantiert die erforderlichen Schmiermittelmengen erhalten.

Ein weiterer Gegenstand der Erfindung ist eine Vorrichtung zur Durchführung des Verfahrens. Diese Vorrichtung besteht aus einem drucklosen, kontinuierlich nachfüllbaren Vorratsbehälter, der mit dem Eingang einer pulsationsfrei-arbeitenden Pumpe über eine Leitung verbunden ist. Als pulsationsfrei arbeitende Pumpe dient vorzugsweise eine Zahnradpumpe mit z. B. schräg verzahnten Zahnrädern aus selbstschmierendem Plastikmaterial, wie Teflon. Der Ausgang der Pumpe führt, als Druckleitung, zu einem oder mehreren Flüssigkeitsventilen; in der Druckleitung befindet sich ein an sich bekanntes Differenzdruckmeßsystem, welches z. B. hydraulisch direkt oder pneumatisch indirekt arbeitet; einmal zu einem justierten bzw. vorgegebenen Druck (Soll-Druck) gemessene Druckdifferenzen werden in elektrische Werte umgesetzt und diese einem Rechner bzw. Comparator zugeführt. Der Rechner kontrolliert und vergleicht die ankommenden Werte mit eingegebenen Soll-Werten. Bei Druckveränderungen, die einen bestimmten Betrag übersteigen, werden die Steuerungszeiten der Flüssigkeitsventile entsprechend im Sinne einer Verkürzung oder Verlängerung der Ventilöffnungszeiten verändert. Zur Messung des Differenzdrucks bedient man sich z. B. sogenannter Differenzdruck-Sensoren, die eine Meßgenauigkeit bis zu ± 0,5 % aufweisen. Solche piezoresistive Sensoren wandeln die mechanische Größe Druck proportional um in ein verstärktes Ausgangssignal von 4 bis 20 mA, ihr Meßbereich umfaßt maximal 0 bis 1000 bar.

Die pulsationsfrei arbeitende Pumpe ist mit einem Antriebsteil, z. B. einem Niederspannungs-Gleichstrommotor, ausgerüstet, wobei eine kontaktlose elektronische Regelungseinrichtung, die auf die Motordrehzahl der Pumpe wirkt, laufend die potentiometrisch einstellbare Sollwertspannung mit der Spannung eines mit der Motorwelle gekuppelten Tachogenerators vergleicht und die Motordrehzahl der Pumpe entsprechend reguliert. Gleichzeitig wird diese lastunabhängige und netzschwankungsunabhängige Geschwindigkeit der Pumpe über den Rechner mit der Taktzahl der Tablettenpresse verglichen und nötigenfalls an diese angepaßt. Die erste Justage der Pumpleistung, durch Auslitern ermittelt, wird demselben Rechner der Ventilsteuerung, gekoppelt mit einer vorgegebenen Taktzahl der Tablettiermaschine, eingegeben. Diese Regelung arbeitet in Form eines geschlossenen Regelkreises und kompensiert durch ihr Feed-back-System auftretende Schwankungen des speisenden Netzes, aber auch Lastschwankungen.

Die Ausgangsleitungen aus den Flüssigkeitsventilen führen in eine Mischkammer oder in eine Gabelung, in die auch die über ein Gasventil gesteuerte Gaszuleitung einmündet; am Ende dieser Mischkammer, die auch als Mischkanal bzw. Gabelung mit anschließendem Mischkanal ausgebildet sein kann, ist ein sogenannter Düsenstock angeschlossen, der aus einem Hohlraum bestimmter Volumina besteht und die zur Ausbringung der Tröpfchen dienenden Düsen aufweist. Die Luftventile werden von dem Rechner so gesteuert, daß sie synchron aber zeitlich versetzt einen definierten Gasstoß abgeben, der der Auswölbung der Menisken an den Düsenendungen, der Freisetzung der Tröpfchen und deren Beschleunigung dient.

Um eine eventuelle Veränderung der Ventilsitze der Druckgasventile auszukompensieren bedient man sich auch hier einer Differenzdruckmessung mittels entsprechender Bauelemente, deren Daten der Rechner abgleicht, wobei die Länge der programmabhängigen Öffnungszeiten der Druckgas-Ventile so verändert werden, daß immer gleichbleibende Gasstöße (gleiches Gasvolumen in derselben Zeit) abgegeben werden.

Die erfindungsgemäße Vorrichtung bietet den Vorteil, daß beim beginnenden Verstopfen einzelner Düsen der Druck in der Leitung zwischen Pumpe und Flüssigkeitsventilen ansteigt, wobei nach Erfassung der anstehenden Druckdifferenz über den Rechnder die Öffnungszeiten der Ventile in dem dafür erforderlichen Maß verlängert werden; dies führt dazu, daß auch weiterhin dieselbe Schmiermittelmenge auf die zu beaufschlagenden Zonen der Preßwerkzeuge abgegeben wird. Erhöht sich aber der Differenzdruck über eine bestimmte Schwelle hinaus, so erfolgt eine Störmeldung. Dasselbe gilt für den umgekehrten Vorgang, bei Erniedrigung des Differenzdruks werden die Öffnungszeiten der Ventile verkürzt; fällt der Differenzdruck über einen bestimmten Betrag hinaus unterhalb des Soll-Drucks, so erfolgt ebenfalls eine Störmeldung.

3

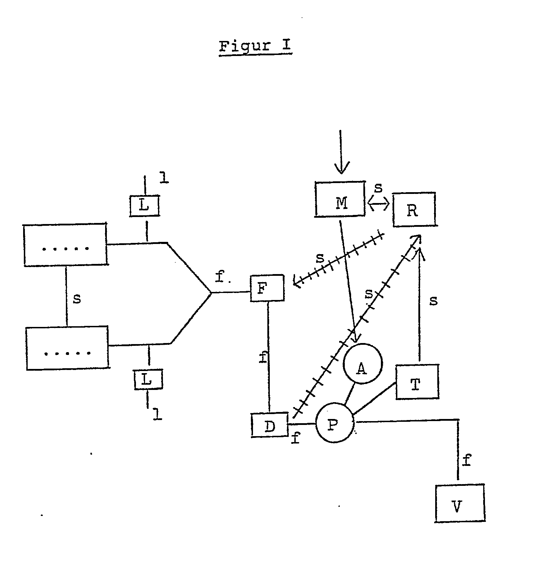

Die Figur 1 gibt eine beispielhafte Ausführungsform des Gegenstandes der Erfindung wieder:
Die Figur 1 beschreibt ein Schema der Gesamtvorrichtung, in welches auch die Steuerungselemente mitintegriert sind. In dieser Zeichnung bedeuten

P eine pulsationsfrei-arbeitende Pumpe,
V einen drucklosen Vorratsbehälter zur Aufnahme der Schmiermittelflüssigkeit oder -suspension,
D ein Differenzdruckmess-System, justiert auf einen Sollwert
A einen Antriebsmotor für die Pumpe,
F ein Flüssigkeitsventil,
L Gasventile,
S Düsenstöcke mit darin enthaltenen Düsen zur Abgabe der Schmiermitteltröpfchen,
T ein Tachogenerator,
R einen elektronischen Rechner mit Speicher und elektronischen Schaltelementen,
M ein auf Soll-Werte justiertes Potentiometer, gleichzeitig als automatisches Steuerungsglied in Verbindung mit dem Comparator,

mit "f" sind die Flüssigkeits-, mit "l" die Gas- bzw. Luftleitungen und mit "s" die elektronischen Verknüpfungen gekennzeichnet. Hierbei stellt dar

———————→  die Verbindung bzw. elektronische Steuerung als Feed-back-System zwischen Tachogenerator, Rechner, Potentiometer, Antriebsmotor bzw. Potentiometer-Rechner/Comparator,

—+—+—+—+—+→  die Verbindung bzw. elektronische Steuerung zwischen Differenzdruckmesser, Rechner, Flüssigkeitsventil.

<u>Beispiel zur Herstellung von Presslingen</u>

Mit einer Tablettiermaschine (Modell 3000 der Firma Wilhelm Fette GmbH, D-2053 Schwarzenbek), die mit 2 Schmiermittelstationen mit je 2 Düsenstöcken zu je 5 Düsen ausgerüstet war, und mit der sonstigen erfindungsgemäßen Anordnung wurden Acetylsalicylsäure-Milchzucker/Stärkekomprimate (Durchmesser 19 mm) nach dem erfindungsgemäßen Verfahren hergestellt. Die Dosierpumpe lief synchron zur Umlaufgeschwindigkeit der Tablettenpresse bei einem maximalen Flüssigkeitsdruck von 6 bar.

Ein Sensor griff den Startzeitpunkt an einem Oberstempel ab. Ein Flüssigkeitsventil öffnete für die Zeit von 2,6 ms, gleichzeitig startete ein Delay für das Gasventil (ca. 2,4 ms Delay-Zeit). Nach dem Schließen des Flüssigkeitsventils registrierte ein zwischen der Pumpe und dem Ventil angebrachter Drucksensor eventuell aufgetretene Druckdifferenzen im Bereich von ± 10 % und ein Mikroprozessor glich bei Vorliegen von Abweichungen die Öffnungszeit des Flüssigkeitsventils aus. Mit dem Schließen des Flüssigkeitsventils begann das Luftventil nach dem Delay-Ablauf den Öffnungsvorgang, die Öffnungszeit betrug dabei 2,4 ms. Auch hier regulierte ein angebrachter Sensor einen eventuell aufgetretenen Ventilsitzverschleiß automatisch. Der so herbeigeführte Dosiervorgang schmierte die Matrizenkante. Nach Ablauf der codierten und eventuell nachregulierten Luftventil-Zeit schloß das Luftventil. Eine codierte Pausenzeit ließ die vorgenannten Vorgänge wiederholen. Bei einer Umlaufgeschwindigkeit von 1 m/s des Tablettiertellers traf der 2. Schuß des Schmiermittels die Mitte der Matrize, der 3. Schuß die gegenüberliegende Matrizenkante. Ein Codierschalter bestimmte, wie oft, bis zu einem neuen Stempelschaft-Abgriff, die Zyklen wiederholt werden sollten. Die Schmiermittelflüssigkeit stand unter einem Druck von 2,8 bar, die Luft von 3,3 bar.

Der Pumpendurchsatz betrug bei 180000 Zylen/h und 2 Schmiermittelstationen mit je 2 Düsenstöcken zu jeweils 5 Düsen insgesamt 320 ml/h oder 80 ml pro Stunde und Düsenstock zu 5 Düsen. Das Schmiermittel bestand aus 4 Gew.-% Stearinsäure und 6 Gew.-% Polyoxyethylensorbitanmonooleat in Ethanol.

Die Tablette hatte bei gleicher Preßkraft wie bei einer nach konventionellen Methoden verpreßten Tablette eine um 40% erhöhte Bruchfestigkeit. Das das Granulat nicht mit einem hydrophoben Schmiermittel gemischt wurde, konnte das Sprengmittel voll aktiv werden. Der Zerfall der Tablette verringerte sich dabei von 65 auf 9 Sekunden.

**EP 0 262 538 B1**

**Patentansprüche**

1. Verfahren zur gesteuerten Freisetzung dosierter Schmiermittelflüssigkeiten oder -suspensionen bei der Beschichtung mit Schmiermitteln von mechanisch beanspruchten Zonen von Preßwerkzeugen in Tablettiermaschinen, wobei aus einem drucklosen Vorratsbehälter (V) mittels einer pulsationsfrei arbeitenden Pumpe (P) die Schmiermittellösung oder -suspension einem oder mehreren Flüssigkeitsventilen (F) dosiert in der Weise, daß die Dosierung synchron mit der Taktzahl der Tablettiermaschine erfolgt, zugeführt wird, dadurch gekennzeichnet, daß ein am Pumpenausgang entstehender Unter- oder Überdruck, gemessen an einem Soll-Druck, eine Veränderung der Öffnungszeiten der Flüssigkeitsventile (F) bewirkt, gegebenenfalls aber auch Druckänderungen der Druckgasventile durch Änderungen der Öffnungszeiten dieser Druckgasventile auskompensiert werden.

2. Verfahren gemäß Anspruch 1, dadurch gekennzeichnet, daß die Förderleistung der pulsationsfrei arbeitenden Schmiermittelpumpe (P) zur Erzeugung eines permanenten Abgleichvorgangs von einem mit der Pumpe mitlaufenden Tachogenerator (T) elektronisch abgefragt, die dabei gefundenen Werte einem Rechner (R) eingegeben, dieser die Werte mit einem vorgegebenen Verhältnis Taktzahl zu Förderleistung der Pumpe vergleicht und bei Abweichungen hiervon über ein den Antrieb der Pumpe steuerndes Potentiometer (M) eine Angleichung der Förderleistung zur Erzielung des vorgegebenen Verhältnisses Taktzahl zu Förderleistung veranlaßt, und der Rechner (R) eine Anpassung der Pumpleistung an die Ansteuerzeit der Flüssigkeitsventile (F), die sich während des Betriebes der Tablettiermaschine in ihrer Charakteristik verändern können, anpaßt, der Flüssigkeitsdruck am Pumpeneingang mit einem vorgegebenen Soll-Druck mittels eines Rechners verglichen wird und festgestellte Druckdifferenzen den Rechner veranlassen, die Öffnungszeiten der Flüssigkeitsventile (F) entsprechend zu ändern, bis der Differenzdruck nicht mehr feststellbar ist.

3. Verfahren gemäß Anspruch 1, dadurch gekennzeichnet, daß durch Messung des Druckes des vor den Druckgasventilen (L) anstehenden Gases und Einspeisung der gefundenen Werte in einen Rechner (R) bzw. Comparator bei Abweichungen von einem Soll-Druck dieser Rechner die Öffnungszeiten der Druckgasventile (L) so korrigiert, daß immer gleichbleibende Gasstöße von diesen abgegeben werden.

4. Vorrichtung zur Durchführung des Verfahrens gemäß den Ansprüchen 1 bis 3, dadurch gekennzeichnet, daß diese aus einer pulsationsfrei arbeitenden Pumpe (P) mit Antriebsteil (A) in Verbindung mit einem drucklosen Vorratsbehälter (V) für die Schmiermittelflüssigkeit oder -suspension, dadurch gekennzeichnet, daß diese aus einer den Ausgang der Pumpe mit einem oder mehreren Flüssigkeitsventilen (F) verbindenden Druckleitung (f), an welcher ein Differenzdruckmeßsystem (D) anliegt, einem oder mehreren Flüssigkeitsventilen (F) und einem oder mehreren Druckgasventilen (L), die den Flüssigkeitsventilen über eine Mischkammer oder eine Gabelung nachgeschaltet sind, einem sich anschließenden Düsenstock mit einer oder mehreren Düsen, einem mit der Antriebswelle der Pumpe (P) gekoppelten Tachogenerator (T), einem Potentiometer (M) und einem elektronischen Rechner bzw. Comparator (R) besteht, wobei das Differenzdruckmeßsystem zur Übermittlung der in elektrische Werte umgesetzten Druckdifferenzen und der Tachogenerator in Form eines geschlossenen Regelkreises mit Feed-back-Eigenschaften, welcher einen steuerbaren Potentiometer enthält, mit dem Rechner bzw. Comparator (R) elektrisch leitend (s) verbunden sind, wobei zur Ausgleichung von Druckdifferenzen der Rechner bzw. Comparator (R) mit den Flüssigkeitsventilen (F), zur Anpassung der Pumpleistung an die Taktzahl über ein Potentiometer (M) mit dem Antriebsmotor (A) elektrisch leitend verbunden ist.

**Claims**

1. Process for the controlled release of metered lubricating liquids or suspensions in applying a coating of lubricant to mechanically stressed zones of pressing tools in tablet-making machines, in which the lubricant solution or suspension is metered to one or more liquid valves (F) from an unpressurised storage container (V) by means of a pump (P) operating without pulsations, in such a way that the metering is in synchronism with the cadence of the table-making machine, characterised in that an under- or overpressure prevailing at the pump outlet and measured against a rated pressure brings about a change in the times of opening of the liquid valves (F), or optionally changes in pressure may be equalised upstream of the pressure gas valves (L) by changes in the times of opening these pressure gas valves.

2. Process as claimed in claim 1, characterized in that the delivery of the pulsation-free lubricant pump (P) is electronically checked by tachogenerator (T) running concurrently with the pump in order to produce a permanent equalising process, the findings are fed into a computer (R) which compares the values with a predetermined ratio of cadence to delivery of the pump and, in the case of any deviations, causes the delivery of the pump to be equalised, via potentiometer (M) controlling the drive of the pump, in order to achieve the given ratio of cadence to delivery, and the computer (R) causes the pump performance to be adapted to the actuation time of the liquid valves (F), which may vary in characteristics during operation of the tablet-making machine, the liquid pressure at the pump input is compared by a computer with a given rated pressure and any pressure differences detected cause the computer to vary the times of opening of the liquid valves (F) accordingly until the differential pressure can no longer be detected.

3. Process as claimed in claim 1, characterized in that, by measuring the pressure of the gas upstream

5

of the pressurised gas valves (L) and feeding the findings into a computer (R) or comparator, in the event of deviations from a rated pressure this computer corrects the times of opening of the pressurised gas valves (L) so that they always release constant gas jets.

4. Apparatus for carrying out the process as claimed in claims 1 to 3, consisting of a pulsation-free pump (P) with drive component (A) in conjunction with a pressureless storage container (V) for holding the lubricant liquid or suspension, characterized in that it consists of a pressure line (f) which connects the outlet of the pump to one or more liquid valves (F), a differential pressure measuring system (D) on this line, one or more liquid valves (F) and one or more pressurised gas valves (L) which are located downstream of the liquid valves via a mixing chamber or a fork, an adjoining nozzle connection with one or more nozzles, a tachogenerator (T) coupled to the drive shaft of the pump (P), a potentiometer and an electronic computer or comparator (R), the differential pressure measuring system for detecting the pressure differences converted into electrical values and the tachogenerator being in the form of a closed regulating circuit with feedback properties, which contains a controllable potentiometer, both being electrically connected to the computer or comparator (R), whilst in order to equalise pressure differences the computer or comparator (R) is electrically connected to the liquid valves (F) and in order to adapt the pump delivery to the cadence it is connected to the drive motor (A) via a potentiometer (M).

## Revendications

1. Procédé de libération commandée de suspensions ou liquides lubrifiants dosés lors de l'enduction, par des lubrifiants, de zones soumises à des contraintes mécaniques dans des outils de presse sur des machines de fabrication de comprimés, dans lequel, au moyen d'un pompe (P) fonctionnant sans impulsions, la solution ou suspension lubrifiante est délivrée de manière dosée à une ou plusieurs soupapes à liquide (F), à partir d'un récipient de réserve (V) exempt de pression, de telle sorte que le dosage ait lieu en synchronisme avec le cycle impulsionnel de la machine de fabrication de fabrication de comprimés, caractérisé par le fait qu'une dépression ou surpressioin engendrée à la sortie de la pompe, mesurée par rapport à une pression de consigne, provoque une variation des durées d'ouverture des soupapes à liquide (F), des variations de pression intervenant en amont des soupapes à gaz comprimé (L) étant toutefois aussi, le cas échéant, compensées par des variations des durées d'ouverture de ces soupapes à gaz comprimé.

2. Procédé selon la revendication 1, caractérisé par le fait que la capacité de refoulement de la pompe à lubrifiant (P) fonctionnant sans impulsions est interrogée électroniquement, en vue de déclencher un processus d'égalisation permanent, à partir d'un générateur tachymétrique (T) tournant conjointement à la pompe; les valeurs ainsi obtenues sont introduites dans un calculateur (R); ce dernier compare les valeurs à un rapport préétabli entre le cycle impulsionnel et la capacité de refoulement de la pompe, et provoque en présence d'écarts vis-à-vis dudit rapport, par l'intermédiaire d'un potentiomètre (M) commandant l'entraînement de la pompe, une égalisation de la capacité de refoulement en vue d'obtenir le rapport préétabli entre le cycle impulsionnel et la capacité de refoulement; et le calculateur (R) adapte une adaptation du rendement de pompage à la durée d'activation des soupapes à liquide (F), dont la caractéristique peut se modifier au cours du fonctionnement de la machine de fabrication de comprimés, la pression du liquide régnant à l'entrée de la pompe est comparée, au moyen d'un calculateur, à une pression de consigne préétablie, puis des différences de pression constatées incitent le calculateur à faire varier en conséquence les durées d'ouverture des soupapes à liquide (F), jusqu'à ce que la pression différentielle ne puisse plus être constatée.

3. Procédé selon la revendication 1, caractérisé par le fait que, par mesurage de la pression du gaz présent en amont des soupapes à gaz comprimé (L), et par introduction des valeurs ainsi obtenues dans un calculateur (R) ou comparateur, ce calculateur corrige les durées d'ouverture des soupapes à gaz comprimé (L), en présence d'écarts par rapport à une pression de consigne, de telle sorte que des impulsions gazeuses toujours constantes soient délivrées par lesdites soupapes.

4. Dispositif pour la mise en œuvre du procédé selon les revendications 1 à 3, comprenant une pompe (P) fonctionnant sans impulsions, avec une partie d'entraînement (A) associativement à un récipient (V), exempt de pression, de réserve en suspension ou en liquide lubrifiant, caractérisé par le fait qu'il comprend un conduit de pression (f) qui relie la sortie de la pompe à une ou plusieurs soupapes à liquide (F), et sur lequel un système (D) mesureur de pression différentielle est installé; une ou plusieurs soupapes à liquide (F) et une ou plusieurs soupapes à gaz comprimé (L) qui sont installées, en aval desdites soupapes à liquide, par l'intermédiaire d'une chambre de mélangeage ou d'une fourche; un porte-vent attenant, renfermant une ou plusieurs buses; un générateur tachymétrique (T), couplé à l'arbre d'entraînement de la pompe (P); un potentiomètre (M); et un calculateur ou comparateur électronique (R), dispositif dans lequel le système mesureur de pression différentielle destiné à établir les différences de pression converties en des valeurs électriques, et le générateur tachymétrique revêtant la forme d'un circuit de réglage fermé à propriétés de réintroduction, qui renferme un potentiomètre commandable, sont reliés de manière électriquement conductrice (s) au calculateur ou comparateur (R), le calculateur ou comparateur (R) étant en liaison électriquement conductrice avec les soupapes à liquide (F), en vue de la compensation de différences de pression, et avec le moteur d'entraînement (A), par l'intermédiaire d'un potentiomètre (M), en vue de l'adaptation du rendement de pompage au cycle impulsionnel.

Figur I